# EUROPEAN PATENT SPECIFICATION

(11) **EP 2 128 950 B1**
(45) Date of publication and mention of the grant of the patent: **16.01.2013**
(21) Application number: 08460019.6
(22) Date of filing: 29.05.2008
(51) Int. Cl.: H02H 9/00

(54) **Protection system for voltage transformers**
Schutzsystem für Spannungstransformatoren
Système de protection pour transformateurs de tension

(43) Date of publication of application: 02.12.2009
(73) Proprietor: ABB Research Ltd., 8050 Zürich (CH)
(72) Inventor: Piasecki, Wojciech, 30-611 Krakow (PL)
(74) Representative: Chochorowska-Winiarska, Krystyna

(56) References cited:
- DE-A1- 2 704 112
- GB-A- 1 150 865
- US-A- 3 401 272

## Description

The subject of the invention is a protection system for voltage transformers, finding application in the attenuation of ferroresonant states occurring in voltage transformers in high and medium voltage grids.

A controlled anti-ferroresonance circuit for a capacitive voltage transformer is known from the British patent specification No. 1 150 865. The system contains a damping burden, a gate-controlled semiconductor switch and a triggering means. The semiconductor switch ensures the connection of the damping burden to the intermediate voltage transformer. The triggering means ensures rendering the switch conductive during the presence of unwanted oscillations.

Similarly, from the German patent application DE 2704112, a protection system is known, protecting the secondary winding of an intermediate voltage transformer. This system contains a damping burden, connected to a PTC resistor, connected to a switch. The switch is controlled by a time element, switching on the damping burden for the heating time of the PTC resistor.

From the American patent specification No. 3401272 a system is known for attenuating ferroresonant states. This system contains a ferroresonance detection circuit, connected with the terminals of the secondary winding of the voltage transformer and with a damping circuit, which, in turn, contains a control system in the form of a timing network, a switching means and a damping load in the form of a resistor. The switching means, used for connecting and disconnecting a resistance load, is controlled by a time network, after receiving a respective signal from the ferroresonance detection system. The ferroresonance detection system contains a reactor and resistor, connected in series. If the saturation of the voltage transformer core occurs, the ferroresonance detection system generates a signal to the timing network controlling the switching means, which immediately connects the damping burden. The switching system controls the switching means in such a way that the resistance load remains connected to the output terminals of the voltage transformer for a period of 20-30 cycles, while the commutation margin of the switching means changes continuously during this time so that after 20-30 cycles the damping burden becomes completely disconnected. In the presented system, the output signal from the ferroresonance detection system causes the immediate connection of a resistance load, irrespective of the occurrence of a permanent ferroresonance state or the short-term core saturation intermediate state of the voltage transformer. If the short-term core saturation intermediate state of the voltage transformer occurs, the resistance load is connected by the switching means without distinct purpose.

The essence of the protection system for voltage transformers, containing a ferroresonance detection circuit, connectable to voltage transformer secondary winding terminals and in parallel with the damping circuit containing a control block and a switching means, connected in series to a damping burden, is the fact that the control block contains a PWM (Pulse Width Modulation) generator, while its output is connected with the control input of the switching means, and one of its inputs is connected to the output or outputs of the ferroresonance detection circuit.

Preferably, the control block takes the form of a microcontroller system with a PWM (Pulse Width Modulation) generator.
Preferably, the ferroresonance detection system contains a resistor and a reactor with a magnetic core connected in series, while the reactor characteristic is chosen in such a way that in case of transformer core saturation, the core of this reactor is also saturated.
Preferably, the ferroresonance detection system contains a resistor bridge, in which to one of its branches a reactor with a magnetic core is connected in parallel, and the resistor resistances and characteristic of this reactor are chosen in such a way that in normal transformer operation conditions the voltage value on the terminals of this reactor is below its saturation level, the voltage on the bridge diagonal is close to zero, while in case of transformer core saturation, the core of this reactor is also saturated and the voltage on the bridge diagonal is different from zero.

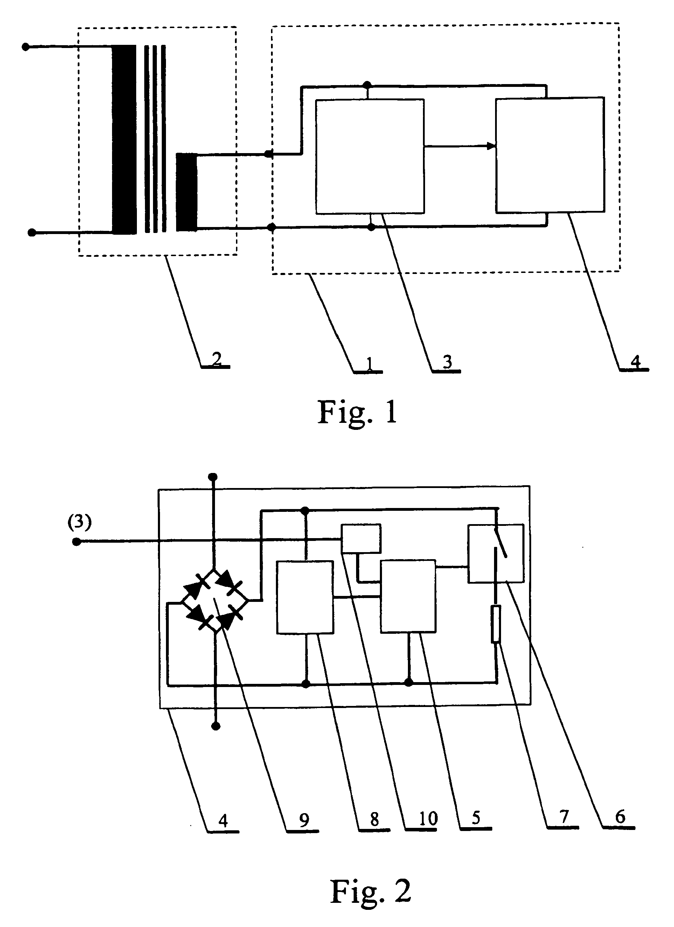

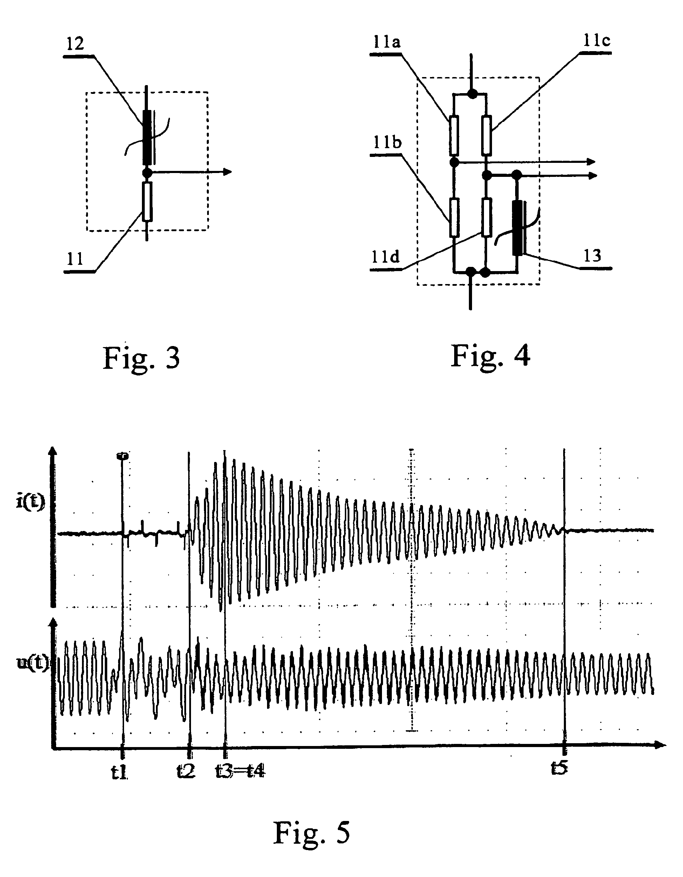

The protection system for voltage transformers according to the invention is presented schematically in the drawing, in which fig. 1 presents schematically the voltage transformer with the connected protection system, fig. 2 - schematic diagram of the damping circuit, fig. 3 - schematic diagram of the resonance detection system in the first embodiment of the invention, fig. 4 - schematic diagram of the resonance detection system in the second embodiment of the invention, fig. 5 - characteristics of voltage on the transformer terminals and current in a system where ferroresonance occurs.

Protection system 1 is connected to the output terminals of the secondary winding of voltage transformer 2. The system contains ferroresonance detection system 3, the inputs of which are connected to the output terminals of voltage transformer 2. The branch with damping circuit 4 is connected in parallel to the ferroresonance detection system. Damping circuit 4 contains control block 5, the output of which is connected to switching means 6 connected in series with damping burden 7. The control circuit contains power supply 8, connected to the main terminals of damping circuit 4 through bridge rectifier 9. The outputs of power supply 8 are connected to the power inputs of control block 5. The third input of the control block is connected through conditioning system 10 to the output of ferroresonance detection system 3.
Power supply 8 is connected in parallel with the branch formed by: switching means 6 and damping burden 7 connected in series.
Control block 5 contains a PWM generator. The control block preferably takes the form of a microcontroller system with a PWM (Pulse Width Modulation) generator. The microcontroller system with a PWM generator is connected to ferroresonance detection system 3 in such a way that the output signals from this system are the input signals of the microcontroller system with a PWM generator, which after counting input signal pulses and recognising the ferroresonance state in voltage transformer 2 starts the PWM generator, producing a high frequency signal controlling switching means 6. The parameters of the output signal from the PWM generator are variable in time according to a programmed scheme, in order to obtain gradual connection and disconnection of damping burden 7.
In the presented embodiment example, power supply 8 as well as the branch containing damping burden 7 and switching means 6 are connected to the main damping block terminals through bridge rectifier 9. Other variants of the invention embodiment are possible, in which the power supply can be realised through its own supply source, for example in the form of batteries, this not being shown in the figure. It is also possible to connect the branch containing damping burden 7 and switching means 6 directly to the main terminals of the damping circuit, with the omission of the bridge rectifier, this not being shown in the figure. This requires application of switching means 6 with bidirectional current flow.

In the first invention embodiment, ferroresonance detection system 3 is formed from resistor 11 and reactor 12 with a magnetic core, connected in series.
In the second invention embodiment, the ferroresonance detection system is formed from resistors 11a, 11b, 11c and 11d connected in a bridge, in which reactor 13 with a magnetic core is connected in parallel to one of the branches.

The operation of the protection system according to the invention is as follows. If the saturation state of the core of transformer 2 occurs, ferroresonance detection system 3 generates control pulses for the microcontroller system with a PWM generator, starting from time t₁, during which transformer core saturation occurred. The task of the microcontroller system with a PWM generator is protection of the system from unjustified connection of a damping burden to transformer 3 terminals, which could result in erroneous operation of automatic protection systems. This requires the differentiation of a permanent ferroresonance state from a short-lasting intermediate state of transformer core saturation. To achieve this, the microcontroller system with a PWM generator counts control pulses in a determined time interval, starting from time t₁. The exceeding of a determined number of counted pulses in a determined time interval leads to the detection of a ferroresonance state by the microcontroller system with a PWM generator. The detection of a ferroresonance state causes the activation of the microcontroller system with a PWM generator in time t₂. The microcontroller system with a PWM generator generates high frequency signals, controlling switching means 6. Switching means 6 control signals are developed in the PWM generator according to a programmed scheme in such a way, that the damping resistance value of damping burden 7, after filtering off high frequency components resulting from switching PWM, has the following time course. Starting from time t₂ to time t₃, the damping resistance value decreases to minimal value. Starting from time t₃ to time t₄, the damping resistance value is maintained at a constant level, after which starting from time t₄ to time t₅, the damping resistance value is increased to a value close to infinity, characterising the sum of resistances of switching means 6 in open state and damping burden resistance 7. Maintaining a constant damping resistance value in time interval t₃-t₄ is optional. In the described way, a programmed course of change is obtained of resultant damping resistance connected to transformer 2 terminals, and thus also of the current flowing in damping burden 7. In this way one avoids the occurrence of overshoot, which would take place in the case of the immediate connection of damping burden 7, as well as the danger of repeated induction of a ferroresonant state, which would take place during the immediate disconnection of damping burden 7.

In the first embodiment of the invention, in ferroresonance detection system 3, the characteristic of the reactor with a magnetic core is chosen so that in case of the saturation of the core of transformer 2, the core of reactor 12 is also saturated. The saturation of reactor 12, occurring in case of the saturation of the core of transformer 2, causes increase in the current flowing through resistor 11. The voltage of the node connecting resistor 11 and reactor 12 becomes the output signal of ferroresonance detection system 3.

In the second embodiment of the invention, in ferroresonance detection system 3, the resistor resistances and characteristic of reactor 13 are chosen in such a way that in normal transformer 2 operation conditions the voltage value on the terminals of reactor 13 is below saturation level, the voltage on the bridge diagonal is close to zero, while in case of the saturation of the core of transformer 2, the core of reactor 13 is also saturated and the voltage on the bridge diagonal is different from zero. The voltage on the bridge diagonal is then different from zero. This voltage becomes the output signal of ferroresonance detection system 3.

The protection system is placed on a printed circuit board, which is preferably placed in a casing and closed in it, forming a device protecting the voltage transformer. This device is connected to the external terminals of the voltage transformer or can be built into the transformer housing and connected to the internal terminals of the voltage transformer.

## Claims

1. A protection system for voltage transformers, containing a ferroresonance detection circuit (3), connectable to voltage transformer secondary winding terminals (2) and in parallel with a damping circuit (4) containing a control block (5) and a switching means (6), connected in series to a damping burden (7), **characterized in that** the control block (5) contains a PWM (Pulse Width Modulation) generator, while its output is connected to the control input of the switching means (6), and one of its inputs is connected to the output or outputs of the ferroresonance detection circuit (3).

2. The system according to claim 1, **characterized in that** the control block (5) takes the form of a microcontroller with a PWM (Pulse Width Modulation) generator.

3. The system according to claim 1, **characterized in that** the ferroresonance detection system (3) contains a resistor (11) and a reactor (12) with a magnetic core connected in series, whilst the characteristic of the reactor (12) is chosen in such a way that in case of transformer (2) core saturation, the core of the reactor (12) is also saturated.

4. The system according to claim 1, **characterized in that** the ferroresonance detection system contains a resistor (11 a, 11 b, 11c, 11 d) bridge, in which to one of its branches a reactor (13) with a magnetic core is connected in parallel, and the resistor resistances and characteristic of the reactor (13) are chosen in such a way that in normal transformer (2) operation conditions the voltage value on the terminals of the reactor (13) is below its saturation level, the voltage on the bridge diagonal is close to zero, while in case of transformer (2) core saturation, the core of the reactor (13) is also saturated and the voltage on the bridge diagonal is different from zero.

## Patentansprüche

1. Schutzsystem für Spannungstransformatoren, das einen Schaltkreis (3) zur Erkennung von Ferroresonanz enthält, der mit den Anschlussklemmen der Sekundärwicklungen (2) des Spannungstransformators und parallel mit einem Drosselkreis (4) verbunden ist, welcher einen Regelungsblock (5) und eine Schalteinrichtung (6) enthält, die in Serie mit einer dämpfenden Belastung (7) verbunden ist, **dadurch gekennzeichnet, dass** der Regelungsblock (5) einen PWM (Pulse Width Modulation) Generator enthält, wobei sein Ausgang mit dem Regeleingang der Schalteinrichtung (6) verbunden ist und einer seiner Eingänge mit dem Eingang oder den Eingängen des Schaltkreises (3) zur Erkennung der Ferroresonanz verbunden ist.

2. System gemäß Anspruch 1, **dadurch gekennzeichnet, dass** der Regelungsblock (5) die Form eines Mikroreglers mit einem PWM (Pulse Width Modulation) Generator hat.

3. System gemäß Anspruch 1, **dadurch gekennzeichnet, dass** das System zur Erkennung von Ferroresonanz (3) einen Widerstand (11) und eine Drossel (12) mit einem Magnetkern enthält, die in Serie geschaltet sind, wobei die Charakteristik der Drossel (12) so gewählt ist, dass im Falle der Kernsättigung des Transformators (2) der Kern der Drossel (12) ebenfalls gesättigt ist.

4. System gemäß Anspruch 1, **dadurch gekennzeichnet, dass** das System zur Erkennung von Ferroresonanz eine Brücke, bestehend aus Widerständen (11a, 11b, 11c, 11d) enthält, in welcher zu einem ihrer Zweige eine Drossel (13) mit Magnetkern parallel geschaltet ist und die Widerstände und die Charakteristik der Drossel (13) so gewählt sind, dass bei normalen Betriebsbedingungen des Transformators (2) der Spannungswert an den Klemmen der Drossel (13) unterhalb ihres Sättigungsniveaus liegt und die Spannung auf der Brückendiagonale nahezu null ist, während im Falle einer Kernsättigung des Transformators (2) der Kern der Drossel (13) ebenfalls gesättigt ist und die Spannung auf der Brückendiagonale ungleich null ist.

## Revendications

1. Un système de protection pour transformateurs de tension contenant un circuit de détection de ferrorésonance (3), connecté aux bornes d'un enroulement secondaire du transformateur (2) et, en parallèle, au circuit d'amortissement (4) contenant un bloc de commande (5) et un dispositif de commutation (6), qui sont connectés en série avec la charge d'amortissement (7), **caractérisé en ce que** le bloc de commande (5) contient un générateur PWM (Pulse Width Modulation), et sa sortie est connectée à l'entrée de commande du dispositif de commutation (6), et l'une de ses entrées est connectée à la sortie ou aux sorties du circuit de détection de ferrorésonance (3).

2. Le système selon la revendication 1 **caractérisé en ce que** le bloc de commande (5) a la forme d'un microcontrôleur avec un générateur PWM (Pulse Width Modulation).

3. Le système selon la revendication 1 **caractérisé en ce que** le système de détection de ferrorésonance (3) contient un résistance (11) et une inductance (12) connectées en série au noyau magnétique et la caractéristique de l'inductance (12) est choisie de manière à ce que, dans le cas de la saturation du noyau du transformateur (2), le noyau de l'inductance (12) soit aussi saturé.

4. Le système selon la revendication 1 **caractérisé en ce que** le système de détection de ferrorésonance contient un pont formé de résistors (11a, 11b, 11c, 11d) dans lequel, en parallèle à l'une de ses branches est connectée l'inductance (13) avec noyau magnétique, et les résistances des résistors et la caractéristique de l'inductance (13) sont choisies de manière à ce que, dans les conditions du fonctionnement normal du transformateur (2), la valeur de la tension aux bornes de l'inductance (13) soit inférieure à sa saturation, et la tension de la diagonale du pont soit proche de zéro, et que, dans le cas de la saturation du noyau du transformateur (2), le noyau de l'inductance (13) soit aussi saturé et que la tension de la diagonale du pont soit différente de zéro.
